# DEMANDE DE BREVET EUROPEEN

(11) **EP 3 470 184 A1**
(43) Date de publication de la demande: **17.04.2019**
(21) Numéro de dépôt: 18200192.5
(22) Date de dépôt: 12.10.2018
(51) Int. Cl.: B25J 15/06, B65G 47/91

(54) **MACHINE DE DÉPLACEMENT D'OBJETS DE PETITE TAILLE PAR SUCCION, PROCÉDÉ DE DÉPLACEMENT D'OBJETS METTANT EN OEUVRE LADITE MACHINE DE DÉPLACEMENT ET MACHINE D'INDIVIDUALISATION D'OBJETS DE PETITE TAILLE COMPRENANT UNE TELLE MACHINE DE DÉPLACEMENT**

(30) Priorité: 13.10.2017 FR 1759618
(71) Demandeur: Expertise Vision, 74300 Thyez (FR)
(72) Inventeur: BASSY, Emmanuel, 74300 Thyez (FR)
(74) Mandataire: Croonenbroek, Thomas Jakob

(57) **Abrégé**

La présente invention concerne une machine de déplacement d'objets de petite taille par succion, comprenant :
• une unité de préhension (5) comprenant un bras de préhension (51),
• une pompe à vide,
• un compresseur avec une sortie de gaz pressurisé, et
• une unité de pilotage,
le bras de préhension (51) présente une pipette support de buse (57) dont une extrémité est reliée à la pompe à vide (7) et l'autre extrémité porte une buse d'aspiration (53), et la machine de déplacement comporte une électrovanne (61) ayant une entrée (63) reliée à la sortie de gaz pressurisé et une sortie (65) débouchant dans un canal d'aspiration (59), le gaz pressurisé en direction du canal d'aspiration (59) étant bloqué par l'électrovanne (61) dans un état d'aspiration et l'électrovanne (61) étant ouverte pour injecter de l'air dans le canal d'aspiration (59) afin d'assurer la libération de l'objet déplacé.

## Description

La présente invention concerne les machines de déplacement d'objets de petite taille, également appelées machines de transfert, permettant le déplacement entre un emplacement de préhension et un emplacement de dépose d'un objet. De telles machines de déplacement peuvent notamment équiper des machines d'individualisation d'objets de petite taille. Par ailleurs, la présente invention concerne également un procédé de déplacement d'objets entre un emplacement de préhension et un emplacement de dépose par aspiration.

Dans de nombreuses industries comme l'industrie mécanique, en particulier horlogère, électronique ou encore agroalimentaire, des objets, de taille par exemple millimétrique, sont produits en grandes quantités et sont amenés en lot à un stade du processus de fabrication/production. Ces objets en lot doivent ensuite être individualisés afin de subir l'opération suivante du processus de fabrication/production, par exemple pour être analysés quant à leur conformité ou pour être monté dans un ensemble plus important, par exemple un mouvement d'horlogerie. D'autre part, dans certaines industries, des objets sont livrés directement sur palette et il est nécessaire de les individualiser afin de les trier ou de les intégrer ou de les monter dans un ensemble plus important par exemple.

Actuellement, dans un soucis de productivité, on souhaite augmenter le temps de cycle de bras robotisés équipant de telles machines de déplacement afin de déplacer un plus grand nombre d'objets en un même temps défini. Pour cela, il s'avère nécessaire de diminuer le temps de préhension et de libération des objets tout en diminuant la masse de ces bras afin de permettre l'augmentation de leur accélération et donc de leur temps de déplacement. Cependant, cette amélioration du temps de déplacement des bras motorisés ne doit pas être réalisée au détriment du temps de préhension/libération par aspiration de cette machine de déplacement.

On connaît du document WO 2012/136598, une machine de déplacement d'objets présentant une pompe à vide et un compresseur permettant la préhension et la libération des objets en jouant sur la pression au niveau de la buse. Toutefois, selon ce document, la mise en oeuvre de la pompe à vide ou du compresseur est pilotée par un interrupteur. Ainsi, la vitesse de préhension ainsi que la libération des objets à déplacer peut être améliorée.

Ensuite, on connaît du document US 2009/0097953 une machine de déplacement de produits emballés utilisant un système d'aspiration afin de saisir les objets et une diminution de l'aspiration au niveau de la buse afin de déposer les objets lorsqu'ils ont atteint leur emplacement de dépose.

Cependant, un tel système permet le déplacement d'objets emballés de taille assez importante et ne semble pas compatible avec le déplacement d'objets de petite taille. De plus, le système générant l'aspiration est embarqué sur le bras de robot ce qui l'alourdi considérablement et limite les accélérations possibles et donc son temps de déplacement. De plus le temps de préhension et de libération des objets peut être améliorée car le système d'aspiration présente une cavité ayant un volume important pour la réalisation du vide entre la buse et l'objet. La variation de pression au sein de cette cavité prend du temps.

Par ailleurs, on connaît de l'art antérieur des machine de déplacement d'objets par aspiration mettant en oeuvre l'effet Venturi.

Cependant, les bras équipant de tels machines de déplacement d'objets sont généralement imposants et lourds. Ainsi, leurs temps de déplacement entre la zone de préhension et la zone de dépose peuvent être relativement élevés. La cadence de déplacement d'objets avec de telles machines peut donc être amélioré.

La présente invention a pour objectif de pallier au moins partiellement les défauts de l'art antérieur énoncés ci-dessus.

Un autre objectif indépendant de la présente invention est de proposer une machine de déplacement d'objets de petite taille dont la vitesse de préhension et de dépose est améliorée.

Un autre objectif de la présente invention, différent des objectifs précédents, est de proposer une machine de déplacement d'objets présentant une masse améliorée du bras de préhension afin d'améliorer le temps de déplacement des objets.

Afin d'atteindre au moins un des objets précités au moins partiellement, la présente invention a pour objet une machine de déplacement d'objets de petite taille par succion entre un emplacement de préhension et un emplacement de dépose, la machine de déplacement comprenant :
- une unité de préhension robotisée des objets comprenant un bras de préhension présentant à une extrémité une buse d'aspiration destinée à aspirer un objet à déplacer et un actionneur de déplacement du bras de préhension relié à celui-ci,
- une pompe à vide,
- un compresseur avec une sortie de gaz pressurisé, et
- une unité de pilotage,
le bras de préhension présentant une pipette support de buse comprenant un canal d'aspiration sans coudes dont une extrémité est reliée à la pompe à vide et l'autre extrémité porte la buse d'aspiration, et la machine de déplacement comportant une électrovanne montée sur le bras de préhension et ayant une entrée reliée à la sortie de gaz pressurisé et une sortie débouchant dans le canal d'aspiration définissant ainsi une zone d'aspiration continue et une zone d'aspiration variable dans le canal d'aspiration, ladite électrovanne étant pilotée par l'unité de pilotage, le gaz pressurisé étant bloqué par l'électrovanne dans un état d'aspiration d'un objet et l'électrovanne étant ouverte dans un état de libération de l'objet, injectant du gaz pressurisé dans le canal d'aspiration afin d'assurer la libération de l'objet déplacé.

L'utilisation de la pipette support de buse permet d'assurer une aspiration en continu dans le canal d'aspiration par la pompe à vide. Par ailleurs, l'utilisation de l'électrovanne uniquement afin d'injecter du gaz pressurisé dans le canal d'aspiration permet de limiter les pertes de charges d'aspiration à l'intérieur du canal d'aspiration et donc d'augmenter les cadences de préhension et de dépose de la machine de déplacement. Par ailleurs, l'utilisation d'une telle pipette support de buse permet de limiter la masse embarquée sur le bras de robot et donc d'augmenter la vitesse de déplacement du bras.

La machine de déplacement selon la présente invention peut comporter en outre une ou plusieurs des caractéristiques suivantes prises seules ou en combinaison.

La sortie de l'électrovanne débouchant dans le canal d'aspiration présente une longueur comprise entre 2 mm et 50 mm.

Selon un aspect, la pipette support de buse comprend une arrivée de la pompe à vide, ladite arrivée étant alignée avec la buse d'aspiration.

Selon un mode de réalisation particulier, le canal d'aspiration présente une forme générale cylindrique.

Selon ce mode de réalisation particulier, le canal d'aspiration présente un diamètre prédéfini.

La sortie de l'électrovanne présente un diamètre inférieur à 5 mm, de préférence inférieur à 2 mm.

En alternative ou en complément, la surface interne du canal d'aspiration est lisse.

Selon un aspect, la sortie de l'électrovanne est disposée perpendiculairement au canal d'aspiration.

Selon un autre aspect, la sortie de l'électrovanne est disposée de manière inclinée dans le canal d'aspiration de sorte que le gaz pressurisé est injecté en direction de la buse d'aspiration.

La buse d'aspiration présente une ouverture dont la taille est configurée pour bloquer le passage des objets à déplacer afin de prévenir toute aspiration de ces objets à l'intérieur de la pipette support de buse.

Selon un mode de réalisation particulier, les objets ont une masse inférieure à 80 g, de préférence comprise entre 1 mg et 50 g.

Selon une variante, la pipette support de buse est amovible du bras de préhension.

Selon une autre variante, la buse d'aspiration est amovible de la pipette support de buse.

La présente invention a également pour objet un procédé de déplacement d'un objet entre un emplacement de préhension et un emplacement de dépose, le procédé mettant en oeuvre une machine de déplacement d'objets telle que définie précédemment.

Le procédé peut comprendre en outre une ou plusieurs des caractéristiques suivantes prises seules ou en combinaison.

Le procédé de déplacement comprend une étape consistant en :
- l'ouverture de la sortie de l'électrovanne afin de permettre l'injection de gaz pressurisé, notamment d'air comprimé, dans le canal d'aspiration de manière à diminuer une puissance d'aspiration au niveau de la buse d'aspiration pour assurer la libération de l'objet à l'emplacement de dépose, et
- la fermeture de la sortie de l'électrovanne de manière à stopper l'injection de gaz pressurisé.

Selon un mode de réalisation particulier, la pompe à vide fonctionne en continu et pour saisir l'objet à l'emplacement de préhension et le maintenir au contact de la buse d'aspiration lors du déplacement du bras de préhension entre l'emplacement de préhension et l'emplacement de dépose l'électrovanne est fermée.

L'unité de pilotage est configurée pour ouvrir la sortie de l'électrovanne lorsque le bras de préhension est arrivé à l'emplacement de dépose de manière à injecter du gaz pressurisé dans le canal d'aspiration de la pipette support de buse de sorte à diminuer l'aspiration de la pompe à vide afin de déposer l'objet à l'emplacement de dépose.

La présente invention a également pour objet une machine d'individualisation d'objets de petite taille comprenant :
- un plateau de réception, éventuellement mobile, sur lequel les objets à individualiser sont disposés, et
- une machine de déplacement des objets configurée pour déplacer les objets à individualiser entre un emplacement de préhension, correspondant au plateau de réception, et un emplacement de dépose,
la machine de déplacement des objets correspondant à la machine de déplacement telle que défini précédemment.

D'autres avantages et caractéristiques de la présente invention apparaîtront plus clairement à la lecture de la description suivante, donnée à titre illustratif et non limitatif, et des dessins annexés dans lesquels :
- la figure 1 est une représentation schématique en perspective d'une machine d'individualisation d'objets de petite taille,
- la figure 2 est une représentation schématique en perspective d'une unité de préhension selon la présente invention,
- la figure 3 est une représentation schématique en perspective partiellement transparente d'une unité de préhension selon un mode de réalisation particulier lorsqu'une électrovanne de l'unité de préhension est fermée
- la figure 4A est une représentation schématique en perspective partiellement transparente de l'unité de préhension de la figure 3 lorsque l'électrovanne est ouverte,
- la figure 4B est une représentation schématique en perspective partiellement transparente de l'unité de préhension selon un autre mode de réalisation particulier, et
- la figure 5 est un organigramme montrant un exemple des différentes étapes d'un procédé de déplacement de pièces entre un emplacement de préhension et un emplacement de dépose.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, on entend par « pression atmosphérique », une pression de 1bar.

D'autre part, dans la description, on entend par « puissance d"aspiration », un débit d'air dans le canal d'aspiration. Ainsi, au sens de la présente description, plus la puissance d'aspiration est importante, plus le volume d'air aspiré par unité de temps au niveau de la buse d'aspiration est important, et de fait plus la force d'attraction (ou d'aspiration) au niveau de cette buse d'aspiration est importante. De même, une diminution de la puissance d'aspiration au sens de la présente description correspond à une diminution du volume d'air aspiré par unité de temps au niveau de la buse d'aspiration, et donc par une diminution de la force d'attraction (ou d'aspiration) au niveau de cette buse d'aspiration.

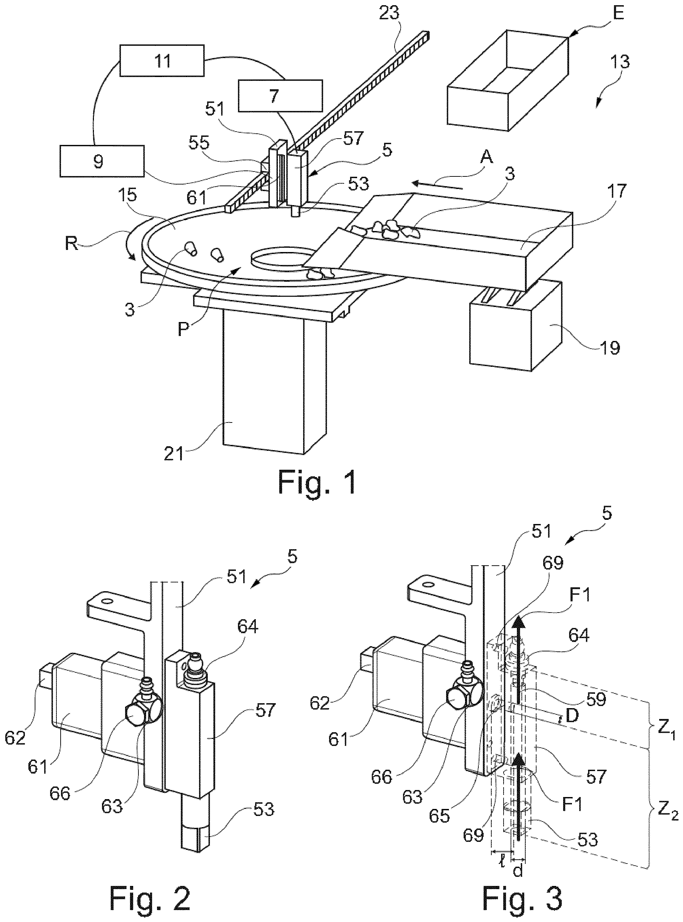

En référence à la figure 1, il est représenté une machine d'individualisation 13 d'objets 3, notamment de petite taille. La machine d'individualisation 13 comprend un plateau de réception 15 sur lequel les objets 3 à individualiser sont disposés et une machine de déplacement 1 des objets 3. La machine de déplacement 1 est configurée pour déplacer les objets 3 à individualiser entre un emplacement de préhension P, pouvant correspondre au plateau de réception 15, et un emplacement de dépose E. Cet emplacement de dépose E peut par exemple correspondre à une machine d'ensachage.

En référence aux figures 1 et 2, la machine de déplacement 1 comprend une unité de préhension 5 robotisée des objets 3, une pompe à vide 7, un compresseur 9 avec une sortie de gaz pressurisé, et une unité de pilotage 11.

L'unité de préhension 5 comprend un bras de préhension 51 présentant à une extrémité une buse d'aspiration 53 destinée à saisir par succion un objet 3 disposé sur le plateau de réception 15 et un actionneur de déplacement 55 du bras de préhension 51 relié à celui-ci. L'actionneur de déplacement 55 est commandé par l'unité de pilotage 11 et est configuré pour assurer le déplacement du bras de préhension 51 entre l'emplacement de préhension P et l'emplacement de dépose E.

Le bras de préhension 51 présente une pipette support de buse 57 comprenant un canal d'aspiration 59 (visible sur la figure 3) sans coudes dont une extrémité est reliée à la pompe à vide 7 et l'autre extrémité porte la buse d'aspiration 53. Le canal d'aspiration 59 présente une zone d'aspiration continue Z1, dans laquelle une puissance d'aspiration est constante, et une zone d'aspiration variables Z2 (visibles sur la figure 3), dans laquelle une puissance d'aspiration peut varier. Ces zones d'aspiration continue Z1 et variable Z2 sont exposées plus en détails ultérieurement. Le canal d'aspiration 59 est droit et sa surface interne est lisse, notamment de forme cylindrique, ce qui évite tout bouchage dû aux particules et poussières présentes dans l'environnement de la machine de déplacement 1. Plus particulièrement, la pipette support de buse 57 présente une arrivée de la pompe à vide 64 connectée à la pompe à vide 7 de manière à permettre la saisie par succion des objets 3 au niveau de la buse d'aspiration 53 afin de permettre leur saisie par le bras de préhension 51 en vue de leur déplacement. L'arrivée de circuit de vide 64 et la buse d'aspiration 53 sont alignées. Ainsi, les pertes de charge peuvent être prévenues car le circuit d'aspiration ne présente plus de coudes par exemple.

Par ailleurs, la machine de déplacement 1 comporte une électrovanne 61 montée sur le bras de préhension 51. L'électrovanne 61 présente une entrée 63 reliée au connecteur 66 relié à la sortie de gaz pressurisé du compresseur 9 et une sortie 65 (visible sur les figures 3 à 4B) débouchant dans le canal d'aspiration 59 définissant ainsi la zone d'aspiration continue Z1 et la zone d'aspiration variable Z2 dans le canal d'aspiration 59. L'électrovanne 61 est également pilotée par l'unité de pilotage 11 afin de permettre ou de bloquer le passage de gaz pressurisé dans le canal d'aspiration 59. Plus particulièrement, l'électrovanne 61 est configurée pour bloquer le passage du gaz pressurisé lorsque la machine de déplacement 1 est dans un état d'aspiration d'un objet 3 et est configurée pour être ouverte lorsque la machine de déplacement 1 est dans un état de libération. L'ouverture de l'électrovanne 61 permet d'injecter du gaz pressurisé dans le canal d'aspiration 59 afin d'assurer la libération de l'objet 3 déplacé par diminution de la puissance d'aspiration au niveau de la buse d'aspiration 53, que l'on peut encore considérer comme une diminution du volume d'air aspiré par unité de temps au niveau de la buse d'aspiration 53. Une telle injection de gaz pressurisé dans le canal d'aspiration 59 permet d'avoir des temps de commutation entre une phase d'aspiration permettant la préhension d'un objet et une phase de dépose de cette objet relativement courts, et notamment inférieurs ou égaux à 5 ms. Comme représenté en référence à la figure 3, la zone d'aspiration continue Z1 est disposée en amont de la zone d'aspiration variable Z2 dans le flux d'air à l'intérieur du canal d'aspiration 59. Plus particulièrement, la zone d'aspiration continue Z1 est située entre l'arrivée de la pompe à vide 64 et la sortie 65 de l'électrovanne 61, et la zone d'aspiration variable Z2 est située entre la sortie 65 de l'électrovanne 61 et la buse d'aspiration 53.

Ainsi, l'électrovanne 61 joue uniquement un rôle d'injection de gaz pressurisé à l'intérieur de la pipette support de buse 57 afin de diminuer la puissance d'aspiration, ou encore le volume d'air aspiré par unité de temps, au niveau de la buse d'aspiration 53 et de permettre ainsi la libération de l'objet 3 déplacé. Avantageusement, ce rôle de l'électrovanne 61 permet une aspiration continue dans la pipette support de buse 57, ce qui permet de limiter la chute de l'aspiration dans la pipette support de buse 57. Dans le cas de la présente unité de préhension 5, la durée de commutation entre un état aspiré et un état lâché est fortement réduite car l'aspiration de la pompe à vide 7 se fait en continu, ce qui permet notamment d'augmenter les cadences de déplacement des objets 3 entre l'emplacement de préhension et l'emplacement de dépose. Par ailleurs, un tel rôle de l'électrovanne 61 permet de prévenir toute obstruction de son ouverture par des poussières par exemple, et donc une éventuelle perte d'aspiration, car elle ne réalise que des opérations d'injection de gaz pressurisé dans le canal d'aspiration 59. Ainsi, les poussières ne peuvent plus venir s'agréger au niveau de l'ouverture de cette électrovanne 61 et nuire à la succion de cette machine de déplacement 1. De plus, l'électrovanne 61 peut être choisie de petite taille car les problèmes de perte de charge sont ainsi évités, ce qui permet la diminution du poids du bras de préhension 51 et permet donc d'augmenter sa vitesse de déplacement et donc les cadences de prise et de dépose de l'unité de préhension 5.

De plus, afin de prévenir toute aspiration des objets 3 à l'intérieur de la pipette support de buse 57, la buse d'aspiration 53 présente une ouverture dont la taille est configurée pour bloquer le passage des objets 3 à déplacer.

Ensuite, le débit d'aspiration peut être assez important pour pouvoir aspirer les pièces alors qu'il y a une fuite autour de l'objet 3. Par fuite autour de l'objet 3, on entend ici une fuite aussi bien disposée à l'intérieur de la forme de l'objet comme cela peut par exemple être le cas pour des boulons ou des rondelles par exemple, ou encore des fuites au niveau de la périphérie de l'objet 3 comme cela peut par exemple être le cas au niveau de deux côtés d'une pièce de forme sensiblement rectangulaire par exemple.

Selon le mode de réalisation particulier de la figure 1, la machine d'individualisation 13 présente un plateau de réception 15 mobile. Plus particulièrement, ce plateau de réception 15 est de forme sensiblement circulaire et mu en rotation à l'aide d'un moteur d'entraînement 21 selon la flèche R. Une telle rotation du plateau de réception 15 peut par exemple permettre une meilleure répartition des objets 3 à individualiser sur ce plateau de réception 15 et faciliter leur préhension. De plus, selon ce mode de réalisation particulier, le plateau de réception 15 peut être alimenté en objets 3 à individualiser à l'aide d'un tapis d'alimentation 17 optionnel, comme par exemple un tapis roulant, mu en déplacement par un moteur 19. Ainsi, les objets 3 à individualiser arrivent sur le plateau de réception 15 selon la flèche A selon ce mode de réalisation particulier et peuvent se répartir sur ce dernier.

De plus, selon le mode de réalisation particulier de la figure 1, l'actionneur de déplacement 55 du bras de préhension 51 est configuré pour déplacer le bras de préhension 51 sur un rail 23 disposé entre l'emplacement de préhension P et l'emplacement de dépose E.

Selon un autre mode de réalisation non représenté ici, l'actionneur de déplacement 55 peut correspondre à un bras articulé télescopique permettant de déplacer le bras de préhension 51 sur l'ensemble du plateau de réception 15 et de déplacer les objets 3 vers l'emplacement de dépose E.

Selon encore une autre variante non représentée ici, le plateau de réception 15 peut correspondre à un tapis roulant sur lequel les objets 3 à individualiser sont étalés afin de faciliter leur préhension par le bras de préhension 51 afin de les individualiser. Selon cette autre variante non représentée, il est également possible de prévoir un bac de récupération (non représenté) des objets 3 qui n'ont pas été prélevés par le bras de préhension 51. Ce bac de récupération pouvant permettre la recirculation des objets 3 sur le plateau de réception 15 par exemple.

De manière optionnelle, il est également possible de prévoir une caméra (non représentée) disposée de manière à pouvoir filmer les objets 3 disposés sur le plateau de réception 15 afin d'identifier les objets 3 pour piloter le déplacement du bras de préhension 51 en fonction de la position des pièces améliorant ainsi les cadences de préhension d'une telle machine de déplacement 1.

Selon encore une variante non représentée ici, le plateau de réception 15 peut présenter des moyens permettant la vibration de celui-ci afin d'améliorer la répartition des objets 3 sur ce plateau de réception 15.

Selon le mode de réalisation particulier de la figure 1, les objets 3 à individualiser ont une masse inférieure à 80 g, et de préférence comprise entre 1 mg et 50 g. Par ailleurs, ces objets peuvent présenter n'importe quelle forme géométrique. Il peut par exemple s'agir de vis, de douilles, ou encore de chevilles. De plus, la préhension et la libération des objets 3 se faisant par une variation de la puissance d'aspiration, ou encore du volume d'air aspiré par unité de temps, au niveau de la buse d'aspiration 53, il est possible de déplacer des objets 3 non-plans ou encore présentant des ouvertures (comme des boulons ou des écrous par exemple), ou encore des objets 3 poreux à l'air.

Par ailleurs, selon une autre variante, la machine de déplacement 1 peut comprendre un réservoir de stockage du gaz pressurisé (non représenté) disposé entre le compresseur 9 et le connecteur 66 de l'entrée 63 de l'électrovanne 61. Selon cette variante, le réservoir de stockage du gaz pressurisé est configuré pour être maintenu à une pression constante à l'aide du compresseur 9.

En référence aux figures 3 à 4B, il est représenté l'unité de préhension 5 selon des modes de réalisation particuliers. Le canal d'aspiration 59 présente une forme générale cylindrique de diamètre d prédéfini. Un tel canal d'aspiration 59 permet d'avoir un flux laminaire dans le canal, c'est-à-dire une aspiration linéaire de la pompe à vide 7 dans le canal d'aspiration 59, et de limiter ainsi les pertes de charge qui peuvent notamment être liées à la présence d'angles droits dans le circuit d'aspiration de la pipette support de buse 57. D'autre part, une telle forme pour le canal d'aspiration 59 permet de prévenir les bouchages qui peuvent être dus à l'aspiration de poussières par la buse d'aspiration 53. Ainsi, une telle forme pour le canal d'aspiration 59 permet de prévenir des défauts d'aspiration de l'unité de préhension 5.

Par ailleurs, la sortie 65 de l'électrovanne 61 présente un diamètre D inférieur à 5 mm, de préférence inférieur à 2 mm. En effet, de tels diamètres D pour la sortie 65 de l'électrovanne 61 permettent d'avoir un débit d'air injecté dans le canal d'aspiration 59 suffisant pour permettre la dépose de l'objet 3 lorsqu'il a atteint l'emplacement de dépose E. La puissance d'aspiration dans la zone d'aspiration variable Z2 varie lors de l'injection d'air comprimé dans le canal d'aspiration 59. Plus particulièrement, la puissance d'aspiration, ou encore le volume d'air aspiré par unité de temps, dans la zone d'aspiration variable Z2 diminue lors de l'injection d'air comprimé dans le canal d'aspiration 59. D'autre part, selon ces modes de réalisation particuliers, la sortie 65 de l'électrovanne 61 débouchant dans le canal d'aspiration 59 présente une longueur l comprise entre 2 mm et 50 mm. Ainsi, cette électrovanne 61 est installée au plus proche de la buse d'aspiration 53 afin de diminuer, voire même de supprimer la cavité de dépression au niveau de la sortie 65 de l'électrovanne 61 de manière à avoir une variation rapide de la puissance d'aspiration au niveau de la buse d'aspiration 53, typiquement cette variation de la puissance d'aspiration est réalisée dans un temps inférieur ou égal à 5 ms. En effet, plus l'électrovanne 61 est proche de la buse d'aspiration 53, plus la longueur 1 de la sortie 65 est faible et plus les variations de la puissance d'aspiration à l'intérieur du canal d'aspiration 59 sont rapides lors de l'injection d'air comprimé dans le canal d'aspiration 59 ou lors de l'arrêt de cette injection d'air comprimé. Il est ainsi possible d'améliorer les temps de préhension/dépose des objets 3 en limitant le temps nécessaire pour avoir de nouveau une puissance d'aspiration suffisante au niveau de la buse de préhension 53.

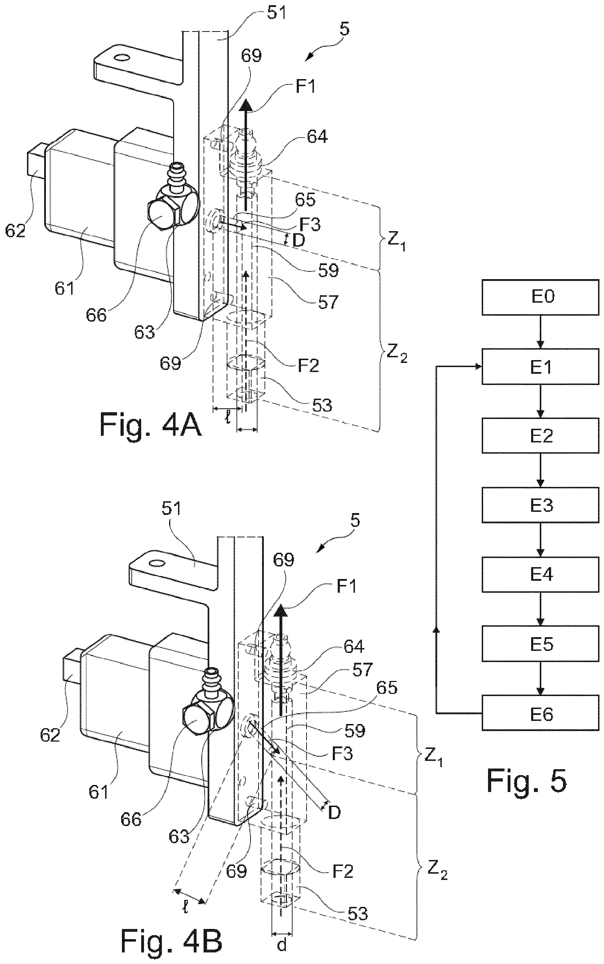

Selon le mode de réalisation particulier des figures 3 et 4A, la sortie 65 de l'électrovanne 61 est disposée perpendiculairement au canal d'aspiration 59. Plus précisément la sortie 65 de l'électrovanne 61 est disposée au niveau du canal d'aspiration 59 de manière à injecter le gaz pressurisé selon une direction perpendiculaire au canal d'aspiration 59 et donc à la direction de l'aspiration de la pompe à vide 7 (visible sur la figure 1) dans le canal d'aspiration 59 afin de permettre la dépose de l'objet 3.

Selon une variante, en référence à la figure 4B, la sortie 65 de l'électrovanne 61 est disposée de manière inclinée dans le canal d'aspiration 59. Plus précisément, la sortie 65 de l'électrovanne 61 est dirigée vers la buse d'aspiration 53 de manière à injecter le gaz pressurisé en direction de cette buse d'aspiration 53 afin de permettre la dépose de l'objet 3. Comme énoncé précédemment, la sortie 65 de l'électrovanne 61 effectue uniquement des opération d'injection de gaz pressurisé. Ainsi, contrairement aux solutions habituelles réalisant une activation/désactivation de l'aspiration par une électrovanne, l'obstruction du clapet de l'électrovanne 61 par des poussières peut être prévenue, les pertes de charge de cette électrovanne 61 également, et l'opérabilité de l'unité de préhension 5 peut ainsi être améliorée.

D'autre part, selon les modes de réalisation des figures 3 à 4B, la pipette support de buse 57 est amovible du bras de préhension 51. A cet effet, la pipette support de buse 57 présente des ouvertures configurées pour coopérer avec des moyens de fixation 69, comme par exemple des vis, portés par le bras de préhension 51. La possibilité de changer de pipette support de buse 57 permet de modifier la puissance d'aspiration en jouant sur le diamètre d du canal d'aspiration 59. En effet, plus ce diamètre d est important, plus le volume d'air aspiré par unité de temps en sortie de la buse d'aspiration 53 est élevé, et donc plus la puissance d'aspiration au niveau de la buse d'aspiration 53 peut être élevée, et plus la masse de l'objet 3 à déplacer par succion peut être importante. Ainsi, il est possible d'adapter la puissance d'aspiration de l'unité de préhension 5 en fonction de la masse des objets 3 à déplacer en changeant uniquement de pipette support de buse 57. De plus, le fait que cette pipette support de buse 57 est amovible permet de procéder à son remplacement rapidement dans le cas où le canal d'aspiration 59 serait obstrué par des poussières ou des corps étrangers par exemple.

Selon une variante non représentée ici, la pipette support de buse 57 peut présenter les moyens de fixation 69 et le bras de préhension 51 les ouvertures destinées à coopérer avec ces moyens de fixation 69.

Par ailleurs, toujours selon ces modes de réalisation particuliers, la buse d'aspiration 53 est amovible de la pipette support de buse 57. Avantageusement, le fait que cette buse 53 est amovible de la pipette support de buse 57 permet de procéder à son remplacement rapidement car la forme de cette buse 53, et notamment son ouverture, est généralement configurée de manière à être spécifique à une forme particulière d'un objet 3 et également de manière à ce que les objets 3 à déplacer ne puissent entrer dans la pipette support de buse 57. Ainsi, il est possible de prévoir des buses 53 de toutes tailles et formes afin de s'adapter au mieux aux objets 3 à déplacer.

En référence aux figures 3 à 5, il est représenté une cinématique de déplacement d'un objet 3 entre l'emplacement de préhension P et l'emplacement de dépose E mettant en oeuvre la machine de déplacement 1 de la figure 1. Plus précisément, la figure 3 présente la cinématique des différents flux d'air à l'intérieur de la pipette support de buse 57 lorsque la sortie 65 de l'électrovanne 61 est fermée, les figures 4A et 4B présentent la cinématique des différents flux d'air à l'intérieur de la pipette support de buse 57 lorsque la sortie 65 de l'électrovanne 61 est ouverte et la figure 5 présente un organigramme reprenant les différentes étapes du déplacement de l'objet 3.

Le procédé de déplacement d'un objet 3 comprend une étape E0 de déclenchement de la pompe à vide 7 afin de créer une puissance d'aspiration dans le canal d'aspiration 59 et au niveau de la buse d'aspiration 53, comme illustré par les flèches F1 de la figure 3. La pompe à vide 7 est réglée de manière à avoir une aspiration prédéfinie et constante tout au long de son fonctionnement. Par ailleurs, au cours de cette étape E0, le compresseur 9 est également déclenché de manière à alimenter l'électrovanne 61 en gaz pressurisé, et à titre d'exemple le réservoir de stockage de gaz pressurisé. Au cours de cette étape E0, l'électrovanne 61 est en position fermée de manière à bloquer le passage du gaz pressurisé dans le canal d'aspiration 59 de la pipette support de buse 57 et de garantir ainsi une bonne aspiration au niveau de la buse d'aspiration 53.

Le procédé met ensuite en oeuvre une étape E1 de déplacement du bras de préhension 51 dans l'emplacement de préhension P. Au cours de cette étape E1 de déplacement, l'électrovanne 61 est toujours fermée.

Le procédé met ensuite en oeuvre une étape E2 de saisie de l'objet 3 par succion au niveau de la buse d'aspiration 53, Au cours de cette étape E2 de saisie de l'objet 3, le bras de préhension peut être rapproché du plateau de réception 15 par exemple de manière à ce que la buse d'aspiration 53 attrape par succion l'objet 3 ciblé pour le déplacement.

Ensuite, le procédé met en oeuvre une étape E3 de déplacement du bras de préhension 51 vers l'emplacement de dépose E, puis une étape E4 d'arrêt du bras de préhension 51 au niveau de l'emplacement de dépose E. Au cours de ces différentes étapes la pompe à vide 7 est maintenue en fonctionnement et l'électrovanne 61 est en position fermée de manière à empêcher le passage du gaz pressurisé en direction du canal d'aspiration 59 de manière à assurer le maintien de l'objet 3 au contact de la buse d'aspiration 53 tout au long du déplacement du bras de préhension 51. Au cours de ces différentes étapes, les puissances d'aspiration dans la zone d'aspiration continue Z1 et dans la zone d'aspiration variable Z2 sont égales et correspondent à la puissance d'aspiration de la pompe à vide 7.

Le procédé met ensuite en oeuvre une étape E5 d'ouverture de la sortie 65 de l'électrovanne 61 afin de permettre l'injection de gaz pressurisé, notamment d'air comprimé, dans le canal d'aspiration 59. L'injection de gaz pressurisé à l'intérieur du canal d'aspiration 59 se fait selon la flèche F3 représentée sur les figures 4A et 4B. Au cours de cette injection de gaz pressurisé à l'intérieur du canal d'aspiration 59 la puissance d'aspiration dans la zone d'aspiration variable Z2 et donc au niveau de la buse d'aspiration 53, représentée par la flèche F2 des figures 4A et 4B, diminue, ce qui permet la libération de l'objet 3 à l'emplacement de dépose E, grâce à la diminution de la puissance d'aspiration à l'intérieur de la zone d'aspiration variable Z2 du canal d'aspiration 59. En effet, lors de l'ouverture de la sortie 65 de l'électrovanne 61, la puissance d'aspiration au niveau de la buse d'aspiration 53, représentée par la flèche F2 correspond à la résultante de la puissance d'aspiration de la pompe à vide 7, et donc du volume d'air aspiré par la pompe à vide 7 par unité de temps, représentée sur les figures 3 à 4B à laquelle on enlève le débit de gaz pressurisé injecté au niveau de la sortie 65 de l'électrovanne 61 représenté par la flèche F3 des figures 4A et 4B. Ainsi, au cours de cette étape E5, la puissance d'aspiration dans la zone d'aspiration variable Z2 est inférieure à la puissance d'aspiration dans la zone d'aspiration continue Z1 afin de permettre la libération de l'objet 3. Plus particulièrement, l'unité de pilotage 11 (visible sur la figure 1) est configurée pour piloter l'étape E5 d'ouverture de la sortie 65 de l'électrovanne 61 lorsque le bras de préhension 51 est arrivé à l'emplacement de dépose E de manière à permettre la libération de l'objet 3. Selon les modes de réalisation particuliers des figures 4A et 4B, le débit d'injection du gaz pressurisé à l'intérieur du canal d'aspiration 59 ne compense pas complètement le débit d'aspiration de la pompe à vide 7. Ainsi, l'objet 3 est uniquement déposé au niveau de l'emplacement de dépose E (si son poids est supérieur à la puissance d'aspiration résultante F2 l'objet tombe par gravité et se détache de la buse d'aspiration 53) et non projeté comme cela pourrait être le cas dans le cas où la puissance d'injection du gaz pressurisé serait supérieure à la puissance d'aspiration de la pompe à vide 7. En effet, dans le cas de déplacement d'objets fragiles ou pouvant se déformer sous l'effet des chocs, la dépose de l'objet 3 doit être réalisée de manière à prévenir toute dégradation de cet objet 3.

Le procédé met ensuite en oeuvre une étape E6 de fermeture de la sortie 65 de l'électrovanne 61 de manière à stopper l'injection de gaz pressurisé et à augmenter la puissance d'aspiration créée par la pompe à vide 7 dans le canal d'aspiration 59, de manière à ce que les puissances d'aspiration dans la zone d'aspiration continue Z1 et dans la zone d'aspiration variable Z2 soient de nouveau égales. Le procédé met ensuite en oeuvre l'étape E1 de déplacement du bras de préhension 51 dans l'emplacement de préhension P afin de permettre le déplacement d'un nouvel objet 3 entre l'emplacement de préhension P et l'emplacement de dépose E tel que décrit ci-dessus. Comme indiqué précédemment, le temps de commutation entre une aspiration suffisante pour la succion de l'objet 3 et une aspiration diminuée afin de permettre sa dépose est inférieur ou égal à 5 ms, ce qui permet notamment d'améliorer l'efficience du procédé de déplacement des objets 3 à l'aide de cette machine de déplacement 1.

Tout au long de ce procédé de déplacement, la pompe à vide 7 fonctionne en continu de manière à définir une puissance d'aspiration constante dans la zone d'aspiration continue Z1 pour saisir l'objet 3 à l'emplacement de préhension P et de le maintenir au contact de la buse d'aspiration 53 lors du déplacement du bras de préhension 51 entre l'emplacement de préhension P et l'emplacement de dépose E lorsque l'électrovanne 61 est fermée de sorte que la puissance d'aspiration dans la zone d'aspiration variable Z2 est identique à la puissance d'aspiration dans la zone d'aspiration continue Z1. Par ailleurs, le fonctionnement en continu de la pompe à vide 7 permet d'améliorer les cadences de préhension et de dépose de l'objet 3 car la puissance d'aspiration à l'intérieur de la pipette support de buse 57 et notamment dans la zone d'aspiration variable Z2 est toujours positive tout au long du procédé de déplacement de l'objet 3. En effet, même pour l'étape E5 d'ouverture de la sortie 65 de l'électrovanne 61 permettant l'injection de gaz pressurisé afin de permettre la libération de l'objet 3, la puissance d'aspiration à l'intérieur du canal d'aspiration 59 dans la zone d'aspiration variable Z2 reste positive, c'est-à-dire inférieure à la pression atmosphérique. Ainsi, l'efficience de la machine de déplacement 1 est ainsi améliorée car les temps d'attente afin d'avoir de nouveau une puissance d'aspiration suffisante dans la zone d'aspiration variable Z2 pour permettre la saisie des objets 3 par succion au niveau de la buse d'aspiration 53 sont réduits.

Selon une variante non représentée, la puissance d'aspiration de la pompe à vide 7, pilotée par l'unité de pilotage 11, peut être diminuée lors de l'étape E5 d'ouverture de la sortie 65 de l'électrovanne 61 pour faciliter la libération de l'objet 3 au niveau de l'emplacement de dépose E.

Les différents modes de réalisation exposés ci-dessus sont donnés à titre illustratifs et non limitatifs. En effet, il est tout à fait possible pour l'homme de l'art de modifier les masses des objets à déplacer sans sortir du cadre de la présente invention. D'autre part, les types d'objets donnés précédemment sont uniquement des exemples. En effet, selon le type de buse d'aspiration 53 utilisée, et notamment la forme de son ouverture, il est tout à fait possible d'aspirer des objets creux comme par exemple des écrous ou des boulons afin de les déplacer en direction de l'emplacement de dépose. Par ailleurs, l'homme de l'art pourra tout à fait utiliser un bras de préhension 51 présentant une pipette support de buse 57 intégrée à ce bras de préhension 51 sans sortir du cadre de la présente invention.

Ainsi, l'amélioration des cadences de déplacement d'objets 3 ainsi que la diminution des risques de pertes d'aspiration d'une machine de déplacement sont possibles grâce à la machine de déplacement 1 décrite ci-dessus, et notamment grâce à la mise en oeuvre d'une électrovanne 61 configurée uniquement pour l'injection de gaz pressurisé dans le canal d'aspiration 59 afin de permettre la libération de l'objet 3 une fois arrivé à l'emplacement de dépose E.

## Revendications

1. Machine de déplacement (1) d'objets (3) de petite taille par succion entre un emplacement de préhension (P) et un emplacement de dépose (E), comprenant :
• une unité de préhension (5) robotisée des objets comprenant un bras de préhension (51) présentant à une extrémité une buse d'aspiration (53) destinée à aspirer un objet (3) à déplacer et un actionneur de déplacement (55) du bras de préhension (51) relié à celui-ci,
• une pompe à vide (7),
• un compresseur (9) avec une sortie de gaz pressurisé, et
• une unité de pilotage (11),
**caractérisée en ce que** le bras de préhension (51) présente une pipette support de buse (57) comprenant un canal d'aspiration (59) sans coudes dont une extrémité est reliée à la pompe à vide (7) et l'autre extrémité porte la buse d'aspiration (53), et **en ce que** la machine de déplacement (1) comporte une électrovanne (61) montée sur le bras de préhension (51) et ayant une entrée (63) reliée à la sortie de gaz pressurisé et une sortie (65) débouchant dans le canal d'aspiration (59) définissant ainsi une zone d'aspiration continue (Z1) et une zone d'aspiration variable (Z2) dans le canal d'aspiration (59), ladite électrovanne (61) étant pilotée par l'unité de pilotage (11), le gaz pressurisé étant bloqué par l'électrovanne (61) dans un état d'aspiration d'un objet (3) et l'électrovanne (61) étant ouverte dans un état de libération de l'objet (3) injectant du gaz pressurisé dans le canal d'aspiration (59) afin d'assurer la libération de l'objet (3) déplacé.

2. Machine de déplacement (1) d'objets (3) selon la revendication précédente, **caractérisé en ce que** la sortie (65) de l'électrovanne (61) débouchant dans le canal d'aspiration (59) présente une longueur (1) comprise entre 2 mm et 50 mm.

3. Machine de déplacement (1) d'objets (3) selon l'une quelconque des revendications précédentes, **caractérisée en ce que** la pipette support de buse (57) comprend une arrivée (64) de la pompe à vide (7), ladite arrivée (64) de la pompe à vide (7) étant alignée avec la buse d'aspiration (53).

4. Machine de déplacement (1) d'objets (3) selon l'une quelconque des revendications précédentes, **caractérisée en ce que** le canal d'aspiration (59) présente une forme générale cylindrique.

5. Machine de déplacement (1) d'objets (3) selon l'une quelconque des revendications précédentes, **caractérisée en ce que** la sortie (65) de l'électrovanne (61) présente un diamètre (D) inférieur à 5 mm, de préférence inférieur à 2 mm.

6. Machine de déplacement (1) d'objets (3) selon l'une quelconque des revendications précédentes, **caractérisé en ce que** la sortie (65) de l'électrovanne (61) est disposée perpendiculairement au canal d'aspiration (59).

7. Machine de déplacement (1) d'objets (3) selon l'une quelconque des revendications 1 à 5, **caractérisé en ce que** la sortie (65) de l'électrovanne (61) est disposée de manière inclinée dans le canal d'aspiration (59) de sorte que le gaz pressurisé est injecté en direction de la buse d'aspiration (53).

8. Machine de déplacement (1) d'objets (3) selon l'une quelconque des revendications précédentes, **caractérisée en ce que** la buse d'aspiration (53) présente une ouverture dont la taille est configurée pour bloquer le passage des objets (3) à déplacer afin de prévenir toute aspiration de ces objets (3) à l'intérieur de la pipette support de buse (57).

9. Machine de déplacement (1) d'objets (3) selon l'une quelconque des revendications précédentes, **caractérisée en ce que** la pipette support de buse (57) est amovible du bras de préhension (51).

10. Machine de déplacement (1) d'objets (3) selon l'une quelconque des revendications précédentes, **caractérisée en ce que** la buse d'aspiration (53) est amovible de la pipette support de buse (57).

11. Procédé de déplacement d'un objet (3) entre un emplacement de préhension (P) et un emplacement de dépose (E), **caractérisé en ce qu'**il met en oeuvre une machine de déplacement (1) d'objets (3) selon l'une quelconque des revendications précédentes.

12. Procédé de déplacement d'un objet selon la revendication 11, **caractérisé en ce qu'**il comprend une étape consistant en :
• (E5) l'ouverture de la sortie (65) de l'électrovanne (61) afin de permettre l'injection de gaz pressurisé, notamment d'air comprimé, dans le canal d'aspiration (59) de manière à diminuer une puissance d'aspiration au niveau de la buse d'aspiration (53) pour assurer la libération de l'objet (3) à l'emplacement de dépose (E), et
• (E6) la fermeture de la sortie (65) de l'électrovanne (61) de manière à stopper l'injection de gaz pressurisé.

13. Procédé de déplacement d'un objet (3) selon l'une quelconque des revendications 11 ou 12, **caractérisé en ce que** la pompe à vide (7) fonctionne en continu et **en ce que** pour saisir l'objet (3) à l'emplacement de préhension (P) et le maintenir au contact de la buse d'aspiration (53) lors du déplacement du bras de préhension (51) entre l'emplacement de préhension (P) et l'emplacement de dépose (E) l'électrovanne est fermée.

14. Machine d'individualisation (13) d'objets (3) de petite taille comprenant :
• un plateau de réception (15) éventuellement mobile sur lequel les objets (3) à individualiser sont disposés, et
• une machine de déplacement (1) des objets (3) configurée pour déplacer les objets (3) à individualiser entre un emplacement de préhension (P), correspondant au plateau de réception (15), et un emplacement de dépose (E),
**caractérisée en ce que** la machine de déplacement (1) des objets (3) correspond à la machine de déplacement (1) selon l'une quelconque des revendications 1 à 10.
